# EUROPÄISCHE PATENTSCHRIFT

(11) **EP 3 762 526 B1**
(45) Veröffentlichungstag und Bekanntmachung des Hinweises auf die Patenterteilung: **31.07.2024**
(21) Anmeldenummer: 19710400.3
(22) Anmeldetag: 11.03.2019
(51) Int. Cl.: D01F 9/14, D01F 9/22

(54) **VERFAHREN UND VORRICHTUNG ZUR STABILISIERUNG VON PRÄKURSORFASERN FÜR DIE HERSTELLUNG VON CARBONFASERN**
METHOD AND DEVICE FOR STABILIZING PRECURSOR FIBERS FOR THE PRODUCTION OF CARBON FIBERS
PROCÉDÉ ET DISPOSITIF DE STABILISATION DE FIBRES PRÉCURSEURS POUR LA FABRICATION DE FIBRES DE CARBONE

(30) Priorität: 09.03.2018 DE 102018203630
(43) Veröffentlichungstag der Anmeldung: 13.01.2021
(73) Patentinhaber: centrotherm international AG, 89143 Blaubeuren (DE)
(72) Erfinder: KELLER, Andreas, 89614 Öpfingen (DE); FAUTH, Gunter, 73660 Urbach (DE); ZIEGLER, Uwe, 89143 Blaubeuren (DE)
(74) Vertreter: Klang, Alexander H.
(86) Internationale Anmeldenummer: PCT/EP2019/055993
(87) Internationale Veröffentlichungsnummer: WO 2019/170909

(56) Entgegenhaltungen:
- EP-A1- 3 312 316
- WO-A1-2008/084732
- WO-A1-2016/204240
- DE-A1- 1 900 243
- GB-A- 2 529 105
- US-B1- 7 534 854

## Beschreibung

Es ist bekannt, Carbonfasern aus unterschiedlichen Präkursor-Materialien herzustellen. Dabei werden Carbonfasern technisch in mehreren Verfahrensschritten erzeugt. Ausgangsmaterial ist meist Polyacrylnitril oder kurz PAN, es werden jedoch auch andere Präkursoren, insbesondere Lignin, Cellulose und Polyethylen als Alternativen für die Carbonfaserherstellung in Betracht gezogen.

Als erster Verfahrensschritt werden die Ausgangsmaterialien zu sogenannten Präkursorfasein geformt. Diese Präkursorfasern werden nachfolgend in zwei weiteren Arbeitsschritten in getrennten Anlagenbereichen in Carbonfasern umgewandelt. Der erste Arbeitsschritt wird als Stabilisierung bezeichnet während der zweite als Carbonisierung bezeichnet wird. Während die Carbonisierung in der Regel bei hohen Temperaturen über 1300°C stattfindet, erfolgt die Stabilisierung, die zu einer Stabilisierung bzw. Vernetzung der Präkursorfasern führt, bei wesentlich niedrigeren Temperaturen, üblicherweise im Bereich 200°C bis 300°C. Dieser Schritt ist notwendig, um die Molekülstrukturen der Präkursorfasern derart zu ändern, dass die Fasern der thermischen Belastung während der Carbonisierung standhalten. Die Stabilisierung wird in der Regel in einem Umluftofen mit separat beheizbaren Zonen durchgeführt, in dem die Präkursorfasern auf Temperaturen zwischen 200°C und 300°C erwärmt werden und mit dem Sauerstoff der Luft bei Atmosphärendruck reagieren. Bei dem Prozess der Stabilisierung entstehen gasförmige Reaktionsprodukte, wie zum Beispiel Kohlendioxid, Blausäure, Kohlenmonoxid und Ammoniak, die kontrolliert abgeführt und entsorgt werden müssen. Dies hat eine aufwändige und teure Abgasbehandlung zur Folge. Derzeitig ist der Schritt der Stabilisierung der kosten- und zeitintensivste bei der Herstellung einer Carbonfaser. Versuche zur Reduktion der Reaktionszeit scheinen sinnvoll, bergen jedoch Herausforderungen.

Im Falle des Präkursormaterials PAN erfolgt während der Stabilisierung eine Oxidationsreaktion mit extern zugeführtem Sauerstoff. Sauerstoff baut sich in die chemische Struktur des Polymers ein und bildet mit dem vorhandenen Wasserstoff im nachgeschalteten Schritt der Carbonisierung letztlich Wasser. Daher ist eine kontrollierte Oxidation vorteilhaft um eine optimale Menge an Sauerstoff einzubringen. Ein Überschuss an Sauerstoff kann dabei die Qualität der Carbonfaser verringern, da sie den Kohlenstoff übermäßig oxidiert.

Andere, bereits Sauerstoff enthaltende Präkursoren wie Lignin oder Cellulose benötigen nicht zwingend extern zugeführten Sauerstoff für die Stabilisierung, jedoch kann die Stabilisierung durch extern zugeführten Sauerstoff gegebenenfalls beschleunigt werden. Bei allen Fällen der Stabilisierung verdichtet sich die Struktur des Präkursors.

Im Lichte der Wirtschaftlichkeit ist eine schnelle Stabilisierung sinnvoll, in chemischer Hinsicht birgt diese jedoch Probleme. Im schlechtesten Falle verdichtet sich die Struktur der Faser an ihrer Oberfläche so stark, sodass die Aufnahme von Sauerstoff, sowie der Abtransport von Produktgasen während der Stabilisierung durch die Bildung eines Fasermantels behindert werden.

Eine Verringerung der Verweilzeit ist daher unter herkömmlichen Bedingungen im Umluftofen nicht sinnvoll. Eine Erhöhung der Prozesstemperatur ist ebenfalls nicht möglich, da die Stabilisierungsreaktion im Falle von PAN stark exotherm ist und eine zu hohe Temperatur zu einem spontanen und unkontrollierten Freiwerden von Energie führen kann, welche zu einem Entzünden des Fasermaterials führen kann.

Die US 7,534,854 B1 zeigt eine Vorrichtung und ein Verfahren zur Oxidierung und Stabilisierung von Polymerfasern, insbesondere für eine spätere Carbonisierung derselben. Die Vorrichtung weist eine langestreckte Vakuumkammer auf, durch die die Polymerfasern hindurchgeführt werden können, sowie einen Plasmagenerator der so angeordnet ist, dass er in der Vakuumkammer oder benachbart hierzu reaktive oxidierende Spezies erzeugt, die mit den Polymerfasern in der Vakuumkammer in Kontakt gebracht werden. Ferner weist die Vorrichtung eine Vorheizstufe auf, die so angeordnet ist, dass sie die Polymerfasern vor dem Einführen in die Vakuumkammer vorheizt.

Es ist daher eine Aufgabe der vorliegenden Erfindung eines oder mehrere der Probleme des Standes der Technik zu überwinden oder zu verbessern. Erfindungsgemäß sieht die Erfindung ein Verfahren nach Anspruch 1 und eine Vorrichtung nach Anspruch 12 vor.

Weitere Ausgestaltungen der Erfindung ergeben sich unter anderem aus den Unteransprüchen.

Das Verfahren sieht eine Stabilisierung unter kontrollierten und genau definierten Prozessbedingungen und bei Temperaturen vor, die zum Teil höher liegen als die bisher üblichen Temperaturen des Standes der Technik. Entsprechend prozessierte Präkursorfasern zeigten reproduzierbar eine hohe Dichte und Gleichmäßigkeit wodurch die anschließend carbonisierten Fasern hervorragende Festigkeitswerte aufwiesen.

Insbesondere weist das Verfahren zum Stabilisieren von Präkursorfasern für die Carbonfaserherstellung, die folgenden Schritte auf: Erwärmen der Präkursorfasern auf eine erste Temperatur und Halten der Temperatur für eine vorbestimmte Zeitdauer; und anschließendes Erwärmen der Präkursorfasern auf wenigstens eine zweite Temperatur, die höher ist als die erste Temperatur und Halten der Temperatur für eine vorbestimmte Zeitdauer; wobei sich die Präkursorfasern während der jeweiligen Erwärmung und zwischen den Erwärmungsschritten in einer Gasatmosphäre mit einem Unterdruck im Bereich zwischen 12 mBar und 300 mBar befinden. Probleme des Standes der Technik können durch das Verfahren vermindert oder gelöst werden, indem die Stabilisierung unter definierter Prozessatmosphäre im Unterdruck, insbesondere mit geringerem Sauerstoff-Partialdruck durchgeführt wird. Dies ermöglicht insbesondere den Einsatz erhöhter Temperaturen.

Bevorzugt befinden sich die Präkursorfasern während der jeweiligen Erwärmung und zwischen den Erwärmungsschritten in einer Gasatmosphäre mit einem Unterdruck im Bereich zwischen 50 mBar und 200 mBar.

Bei einer Ausführungsform werden die Präkursorfasern über wenigstens eine weitere Zwischentemperatur von der ersten Temperatur auf die der zweite Temperatur erwärmt, wobei die Temperaturdifferenz zwischen zeitlich aufeinanderfolgenden Stufen wenigstens 5°C, insbesondere wenigstens 10°C beträgt, und wobei Präkursorfasern für eine vorbestimmte Zeitdauer auf der wenigstens einen Zwischentemperatur gehalten werden. Eine mehrstufige Temperaturerhöhung hat sich besonders Vorteilhaft erwiesen. Bevorzugt liegt die zweite Temperatur um wenigstens 30°C, insbesondere um wenigstens 40°C höher ist als die erste Temperatur. Für gute Prozessergebnisse werden die die Präkursorfasern bevorzugt für jeweils wenigsten 10 Min, bevorzugt für wenigstens 20 Min auf der ersten Temperatur, der zweiten Temperatur und wenigstens einer optionalen Zwischentemperatur gehalten.

Für PAN-Fasern sollte die erste Temperatur im Bereich 220 bis 320°C und die zweite Temperatur im Bereich 280 bis 400°C liegen. Besonders gute Ergebnisse wurden erreicht wenn die erste Temperatur im Bereich 260 bis 320°C und die zweite Temperatur im Bereich 300 bis 380°C liegt.

Für Präkursorfasern die auf Basis von Cellulose und/oder Lignin aufgebaut sind sollte die erste Temperatur im Bereich 200 bis 240°C und die zweite Temperatur im Bereich 240 bis 300°C liegen.

Gemäß einer bevorzugten Ausführungsform des Verfahrens werden die Präkursorfasern kontinuierlich durch einen Unterdruckbereich hindurchgeführt, um ein kontinuierliches Prozessieren vorzusehen. Für gute Prozessergebnisse werden die Präkursorfasern während des Verfahrens bevorzugt unter definierter Spannung gehalten. Hierbei hat sich eine Spannung im Bereich zwischen 0,5 und 10 N pro 3k Faserbündel als geeignet erwiesen.

Für ein gutes und gleichmäßiges Prozessieren wird die Gasatmosphäre während des Stabilisierungsverfahrens bevorzugt kontinuierlich oder intermittierend ausgetauscht. Insbesondere kann ein auf Unterdruck gehaltener Prozessbereich kontinuierlich mit einer Gasströmung, insbesondere Druckluft durchströmt werden. Die Strömungsrate ist abhängig von den Dimensionen der Prozesskammer und der Menge und Art an Prozessgut. Im Falle einer 2 m Prozesskammer und 2 m 3k Faser und 80 min Verweildauer rechnet man mit einer Strömung von 5 bis 40 slm, insbesondere 10 bis 35 slm. Bei einer Ausführungsform werden die Präkursorfasern während des Verfahrens durch wenigstens eine Muffel mit wenigstens zwei benachbarten, unterschiedlich temperierten Zonen hindurchgeführt.

Die Vorrichtung zum Stabilisieren von Präkursorfasern für die Carbonfaserherstellung weist insbesondere Folgendes auf: wenigstens eine langgestreckte Vakuumkammer, zum Hindurchführen der Präkursorfasern, wobei die Vakuumkammer auf einen Druck unter 300 mBar evakuierbar ist; wenigstens einer Schleuseneinheit an einem Ende der wenigstens einen Vakuumkammer, zum abgedichteten Einführen einer Vielzahl von Präkursorfasern in die wenigstens eine Vakuumkammer; wenigstens einer Schleuseneinheit an einem Ende der wenigstens einen Vakuumkammer, zum abgedichteten Ausführen einer Vielzahl von Präkursorfasern aus der wenigstens einen Vakuumkammer; und wenigstens eine Heizeinheit mit wenigsten zwei individuell ansteuerbaren Heizelementen, die geeignet die wenigstens eine Vakuumkammer in Längsrichtung benachbarten Heizzonen auf wenigstens zwei unterschiedliche Temperaturen aufzuheizen. Eine solche Vorrichtung ermöglicht die Durchführung einer Stabilisierung von Präkursorfasern unter kontrollierten Prozessbedingungen.

Für ein kontinuierliches und gutes Prozessieren weist die Vorrichtung bevorzugt ferner eine Transporteinheit auf, die geeignet ist kontinuierlich Präkursorfasern mit einer gewünschten Geschwindigkeit und Spannung durch die Vakuumkammer zu fördern. Insbesondere sollte die Transportvorrichtung geeignet sein die Präkursorfasern während des Transports unter definierter Spannung mit einer Kraft zwischen 0,5 und 10N pro 3k Faserbündel zu halten.

Gemäß einer Ausführungsform ist die Heizeinheit geeignet die wenigstens eine Vakuumkammer in wenigstens 3 Heizzonen auf unterschiedliche Temperaturen aufzuheizen. Dabei sollte die Heizeinheit bevorzugt geeignet sein die wenigstens eine Vakuumkammer in einer ersten Heizzone auf eine erste Temperatur im Bereich 200 bis 320°C und in einer zweiten Heizzone auf eine zweite Temperatur im Bereich 280 bis 400°C zu erwärmen.

Bevorzugt weist die Vorrichtung wenigstens zwei übereinanderliegende Vakuumkammern und wenigstens eine Umlenkeinheit auf, wobei die Umlenkeinheit übereinanderliegende Enden der Vakuumkammern vakuumdicht verbindet, um einen fortlaufenden Vakuumraum zu bilden und wobei die Umlenkeinheit wenigstens eine Faserführung zum Führen der Präkursorfasern von einer Vakuumkammer zur nächsten aufweist.

Die Erfindung wird nachfolgend unter Bezugnahme auf die Zeichnungen noch näher erläutert. In den Zeichnungen zeigt:
- Fig. 1: einen schematische Seitenansicht einer Stabilisierungsvorrichtung gemäß der Erfindung, wobei eine Prozesseinheit geschnitten dargestellt ist;
- Fig. 2: eine schematische Draufsicht auf die Vorrichtung gemäß Fig. 1, wobei die Prozesseinheit wieder geschnitten dargestellt ist;
- Fig. 3.: Eine schematische Querschnittsansicht durch eine Prozesseinheit der Vorrichtung gemäß Fig. 1;
- I Fig. 4: eine schematische Längsschnittansicht durch eine beispielhafte Schleuseneinheit der Stabilisierungsvorrichtung gemäß Fig. 1;
- Fig. 5: eine Explosionsansicht der Schleuseneinheit gemäß Fig. 4;
- Fig. 6.: Eine schematische Seitenansicht einer alternativen Ausführungsform einer Stabilisierungsvorrichtung gemäß der Erfindung; und

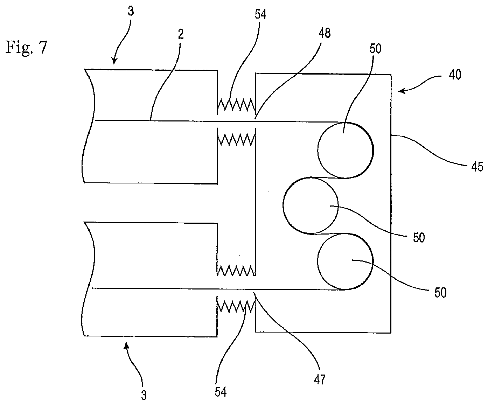

- Fig. 7: eine vergrößerte Detailansicht einer Umlenkungseinheit gemäß der Ausführungsform der Fig. 6.

In der Beschreibung verwendete Begriffe, wie oben, unten, links und rechts beziehen sich auf die Darstellung in den Zeichnungen und sind nicht einschränkend zu sehen, obwohl sie sich auch auf bevorzugte Ausrichtungen beziehen können. Im nachfolgenden wird der Grundaufbau einer Stabilisierungsvorrichtung 1 sowie einer Alternative anhand der Figuren näher erläutert. Über die Figuren hinweg werden dieselben Bezugszeichen verwendet, sofern dieselben oder ähnliche Elemente beschrieben werden.

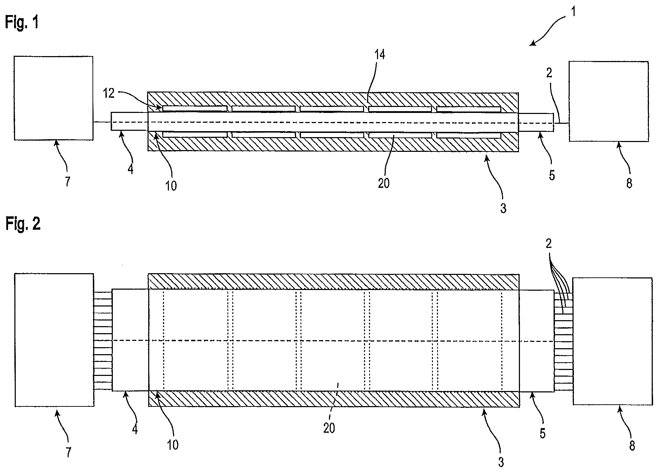

Ein Grundaufbau einer Stabilisierungsvorrichtung 1 für Präkursorfasern 2 ist in den Figuren 1 und 2 dargestellt. Die Stabilisierungsvorrichtung 1 besteht im Wesentlichen aus einer zentralen Prozesseinheit 3 mit einer eingangsseitigen Schleuseneinheit 4 und einer ausgangsseitigen Schleuseneinheit 5, sowie einer Faserzuführung 7 und einer Faseraufnahme 8. Die Faserzuführung 7 und die Faseraufnahme 8 sind streng genommen kein Teil der Stabilisierungsvorrichtung 1 an sich, da sie lediglich eine Faserzuführung zu der Stabilisierungsvorrichtung 1 und eine Aufnahme aus derselben vorsehen. Sie sind geeignet Präkursorfasern 2 kontinuierlich zu liefern bzw. die stabilisierten Fasern aufzunehmen. Dabei sind die Einheiten 7, 8 jeweils geeignet eine Vielzahl von Präkursorfasern 2 parallel zueinander in einer Ebene zu liefern bzw. aufzunehmen, wie in der Draufsicht in Fig. 2 angedeutet ist. Da solche Einheiten bekannt und im Markt in unterschiedlichen Ausführungen bekannt sind erfolgt keine weitere Beschreibung dieser Einheiten 7, 8.

Die Prozesseinheit 3 besitzt eine langgestreckte Vakuumkammer 10, eine Heizeinheit 12 direkt benachbart zu, in Kontakt mit oder innerhalb der Vakuumkammer 10, und eine Isolierung 14, welche die Vakuumkammer 10 und ggf. die Heizeinheit 14 umgibt. Ferner besitzt die Prozesseinheit 3 wenigstens eine Vakuumpumpe und eine Gaszuführung, die beide in geeigneter Weise mit der Vakuumkammer 10 verbunden sind. Die Vakuumpumpe und die Gaszuführung sind nicht dargestellt, da der jeweilige Aufbau für die Erfindung nicht wesentlich ist. Die Vakuumpumpe ist so ausgelegt, dass sie zum Beispiel einen Unterdruck im Bereich von 12 bis 300 mBar innerhalb der Vakuumkammer 10 einstellen kann, während die Gaszuführung beispielsweise eine Strömung von 5 bis 150 slm liefert, wobei als Gas beispielsweise Umgebungsluft verwendet werden kann. Bei der Verwendung von Umgebungsluft würde sich somit bei ca. 21% Sauerstoffanteil ein Sauerstoff-Partialdruck von 2,5 bis 63 mBar bei einem Kammerdruck von 12 bis 300mBar ergeben. Ein entsprechender Sauerstoff-Partialdruck ließe sich auch bei einem höheren Kammerdruck erreichen, indem zum Beispiel ein Gasgemisch mit einem Sauerstoffanteil unter 21 % verwendet wird. Bei einer Mischung aus 50% reinem Stickstoff und 50% Umgebungsluft würde sich der Sauerstoffanteil auf ca 11,5% verringern, sodass der Kammerdruck auf 24 bis 600mBar eingestellt werden könnte um einen Sauerstoff-Partialdruck von 2,5 bis 63 mBar zu erhalten. Mithin sind die nachfolgend angegebenen Kammerdrücke jeweils auf die Verwendung von Umgebungsluft bezogen.

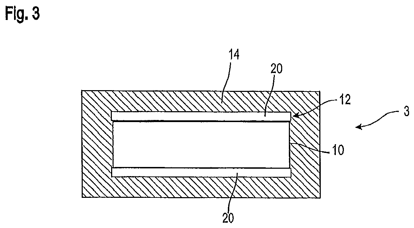

Die Vakuumkammer 10 besitzt einen rechteckigen Querschnitt, wie am besten in Fig. 3 zu sehen ist. An ihren Längsenden ist die Vakuumkammer 10 mit den Schleuseneinheiten 4, 5 verbunden, über die, wie nachfolgend noch erläutert wird, kontinuierlich Präkursorfasern 2 in die Vakuumkammer 10 eingeführt werden können. Die Vakuumammer 10 ist aus einem geeigneten hitzebeständigen Material, das bevorzugt bis wenigsten 400°C hitzebeständig ist, aufgebaut. Die Vakuumkammer 10 besitzt beispielsweise eine Länge von 2m bis 6m, wobei natürlich auch andere Längen denkbar sind.

Die Heizeinheit 12 weist eine Vielzahl von individuell ansteuerbaren Heizplatten 20 auf, die in der Draufsicht in Fig. 2 nur schematisch angedeutet sind. Die Heizplatten 20 sind gemäß Fig. 1 und 3 jeweils paarweise ober und unterhalb der Vakuumkammer 10 angeordnet. Wobei die Heizplatten jeweils die gesamte Breite der Vakuumkammer 10 überdecken und die Paare jeweils in Längsrichtung benachbart liegen. Hierdurch werden unterschiedlich beheizbare Zonen gebildet. Bei der Darstellung in den Figuren 1 und 2 sind fünf Paare von Heizplatten 20 gezeigt, sodass sich fünf unterschiedliche beheizbare Zonen ergeben. Die Anzahl der Paare von Heizplatten und der hierdurch gebildeten Zonen kann sich von der gezeigten Anzahl unterscheiden, wobei wenigstens zwei Zonen vorhanden sein sollten. Statt Heizplatten 20, wie gezeigt, könnten auch umlaufende Heizkassetten oder andere Formen von Heizelementen vorgesehen sein, wie der Fachmann erkannt. Wie zuvor angedeutet können die Heizplatten 20 oder auch andere geeignete Heizelemente derart innerhalb der Vakuumkammer 10 angeordnet sein, dass in Längsrichtung benachbarte Heizzonen vorgesehen werden.

Die Heizplatten 20 sind so ausgelegt, dass sie innerhalb der jeweiligen Zone über die Breite der Vakuumkammer und den abgedeckten Längenbereich eine im Wesentlichen gleichbleibende Temperatur in der Vakuumkammer 10 vorsehen. Insbesondere sind sie so ausgelegt, dass sie eine Temperatur im Bereich von 220 bis 400°C einstellen können. Die Isolierung 14 umgibt die Vakuumkammer 10 und die Heizeinheit 12 um sie gegenüber der Umgebung thermisch zu isolieren, wie es in der Technik für Durchlauföfen bekannt ist.

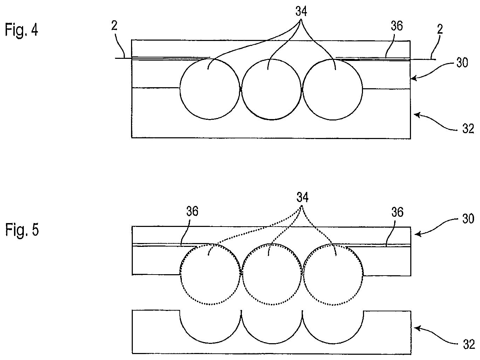

Anhand der Figuren 4 und 5 wird nun eine beispielhafte Ausführungsform einen Schleuseneinheit 4, 5 näher erläutert. Die Schleuseneinheiten 4 und 5 können im Wesentlichen denselben Aufbau besitzen und es können mehrere Einheiten hintereinanderliegen angeordnet sein, um eine verbesserte Vakuumabdichtung vorzusehen.

Bei der dargestellten Ausführungsform weist die Schleuseneinheit 4 ein oberes Gehäuseteil 30, ein unteres Gehäuseteil 32 und drei Transportrollen 34 auf. Die Gehäuseteile 30, 32 sind einem Zusammenbauzustand aneinander befestigt, wobei zueinander weisende Oberflächen ggf. unter Zwischenlage eines Dichtelements Druckdicht verbunden sind. In den jeweiligen Oberflächen sind jeweils halbrunde Aufnahmen ausgebildet, die im Zusammenwirken mit den Aufnahmen des anderen Gehäuseteils im Querschnitt runde Aufnahmen bilden, die zur engpassenden Aufnahme der Transportrollen 34 bemessen sind. Insgesamt sind in einer Längsrichtung der jeweiligen Gehäuseteile 30, 32 drei dieser Aufnahmen vorgesehen. Die Mittlere der Aufnahmen steht an einer Mittelebene in Verbindung mit den benachbarten Aufnahmen. In dem oberen Gehäuseteil 30 weist an seinen Stirnseiten ferner jeweils eine schlitzförmige Durchführung auf, welche die jeweilige Stirnseite mit dem Scheitelpunkt der benachbarten außenliegenden halbrunden Aufnahme verbindet.

Die Transportrollen sind in den jeweiligen Aufnahmen derart aufgenommen, dass die Mittlere die äußeren an der Mittelebene, dort wo die Aufnahmen in Verbindung stehen kontaktieren bzw. ein kleiner Spalt dazwischen gebildet wird. Die Präkursorfasern 2 können in abgedichteter Weise durch die Schleuseneinheit 4, 5 hindurchgeführt werden, wie anhand der Fig. 4 näher erläutert wird, wobei von einer Laufrichtung der Präkursorfasern 2 von links nach rechts ausgegangen wird. Die Faser passiert den geringen Spalt zwischen den Walzen.

Wie in Fig. 4 zu erkennen ist können im zusammengebauten Zustand der Gehäuseteile 30, 32 über die linke Durchführung 36 Präkursorfasern 2 zu der benachbarten Aufnahme eingeführt werden. Dort werden die Präkursorfasern 2 über die entsprechende Transportrolle 34 zur Mittleren Aufnahme geführt und zwischen der linken und der mittleren Transportrolle hindurchgeführt. Über die mittlere Transportrolle 34 werden die Präkursorfasern 2 dann zur rechten Aufnahme geführt, wo sie dann zwischen der mittleren Transportrolle und der rechten Transportrolle hindurchgeführt werden. Die Präkursorfasern 2 werden dann über die rechte Transportrolle zur rechten Durchführung 36 und aus der Schleuseneinheit heraus geführt. Die Transportrollen 34 sind so in den jeweiligen Gehäuseteilen 30, 32 geführt, dass sie an den Längsseiten abgedichtet sind und eine Gasströmung von der linken Durchführung 36 zur rechten Durchführung 36 im Wesentlichen nur entlang des Weges möglich ist, den die Präkursorfasern 2 nehmen. Über eine entsprechende Führung ist es möglich eine Ausreichende Dichtigkeit vorzusehen, während eine kontinuierliche Förderung der Präkursorfasern 2 möglich ist. Wenigstens eine der Transportrollen 34 steht mit einem Antrieb in Verbindung, sodass die Schleuseneinheiten gleichzeitig als Antrieb für die Präkursorfasern 2 fungieren können. Die Transportrollen 34 können aber auch freilaufend sein und außerhalb der Schleuseneinheiten können Antriebsrollen für den Transport der Präkursorfasern 2 vorgesehen sein, was derzeitig die bevorzugte Variante ist. Insbesondere sollte der Antrieb eine Transportgeschwindigkeit der Präkursorfasern 2 in der Prozesseinheit 3 sowie eine Spannung der Präkursorfasern 2 einstellen können.

Eine alternative, nicht dargestellte Schleuseneinheit besteht aus mindestens 2, bevorzugt 3 einzelnen Schleusenkammern, die aneinandergereiht in ihrer Funktion 1 bzw. 2 Druckstufen ausbilden. Eine Schleuseneinheit besteht aus einem vakuumdichten Gehäusekörper, in dem sich zwei horizontale, parallel übereinander zueinander angeordnete Walzen befinden, die gegenläufig zueinander sich bewegen. Bei den Walzen ist mindestens eine angetrieben und sie haben eine Transportfunktion. Die Walzen sind in ihrem Abstand zueinander einstellbar. Im Betrieb befindet sich kein bis ein sehr geringer Spalt zwischen den Walzen. Über eine Einstellschraube oder ein anderes System, zum Beispiel einen Druckluftzylinder, lässt sich der Anpressdruck der Walzen zueinander einstellen. In der Regel reicht es, wenn eine Walze fix ist und die Position der anderen vertikal eingestellt werden kann. Um eine optimale Abdichtung zu erreichen, hat mindestens eine der Walzen eine weiche, elastische Oberflächenbeschichtung. Eine Abdichtung zum Gehäuse hin kann durch ein Element erreicht werden, dass zum Gehäuse hin abgedichtet ist und zum Beispiel beabstandet vom Spalt zwischen den Walzen federnd gegen den Außenumfang der Walzen drückt.

Eine Schleuseneinheit, bestehend aus 3 Schleusenkammern und 2 Druckstufen, benötigt 2 Vakuumpumpen, wobei eine für die erste Druckstufe und die zweite für die zweite Druckstufe verantwortlich sind. Die Druckstufen von zwei Schleuseneinheiten, je Einlauf- und Auslaufseitig können gegebenenfalls zusammengefasst werden.

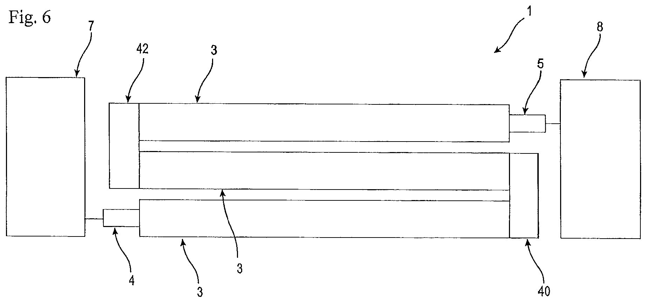

Fig. 6 zeigt eine alternative Ausführungsform einer Stabilisierungsvorrichtung 1 mit drei vertikal übereinanderliegenden Prozesseinheiten 3, einer eingangsseitigen Schleuseneinheit 4, einer ausgangsseitigen Schleuseneinheit 5, einer Faserzuführung 7, einer Faseraufnahme 8, sowie Umlenkeinheiten 40 und 41. Die Faserzuführung 7 und die Faseraufnahme 8 sind wiederum streng genommen kein Teil der Stabilisierungsvorrichtung 1, da sie lediglich eine Faserzuführung zu der Stabilisierungsvorrichtung 1 und eine Aufnahme aus derselben vorsehen. Sie sind geeignet Präkursorfasern 2 kontinuierlich zu liefern bzw. aufzunehmen. Dabei sind die Einheiten 7, 8 jeweils geeignet eine Vielzahl von Präkursorfasern 2 parallel zueinander in einer Ebene zu liefern bzw. aufzunehmen, wie in der Draufsicht in Fig. 2 angedeutet ist. Da solche Einheiten bekannt und im Markt in unterschiedlichen Ausführungen bekannt sind erfolgt keine weitere Beschreibung dieser Einheiten 7, 8.

Bei der dargestellten Ausführungsform sind drei Prozesseinheiten 3, die denselben Aufbau besitzen können wie bei der ersten Ausführungsform vertikal übereinanderliegend vorgesehen. Die eingangsseitige Schleuseneinheit 4 ist an der linken Seite der untersten Prozesseinheit 3 angebracht und die ausgangsseitigen Schleuseneinheit 5 ist an der rechten Seite der oberen Prozesseinheit 3 angebracht. Die Schleuseneinheiten 4, 5 können im Wesentlichen wiederum denselben Aufbau wie bei der ersten Ausführungsform besitzen.

Das rechte Ende der unteren Prozesseinheit 3 ist über die Umlenkeinheit 40 vakuumdicht mit dem rechten Ende der mittleren Prozesseinheit 3 verbunden. Das linke Ende der mittleren Prozesseinheit 3 ist wiederum über die Umlenkeinheit 42 vakuumdicht mit dem linken Ende der oberen Prozesseinheit 3 verbunden.

Die Umlenkeinheiten 40. 42 sind im Wesentlichen gleich aufgebaut und im nachfolgenden wird die Umlenkeinheit 40 näher erläutert. Die Umlenkeinheit 40 weist ein vakuumdichtes Gehäuse 45 auf, das zwei Durchführungen 47, 48 in einer Seitenwand des Gehäuses 45 aufweist, sowie Transport- und Führungsrollen 50. Das Gehäuse 45 besitzt eine geeignete Form und Größe, das es an den Enden zweier übereinander liegender Prozesseinheiten 3 angebracht werden kann, um diese zu verbinden. Dabei werden die Durchführungen 47, 48 in der Seitenwand mit entsprechenden Öffnungen in den Enden der Prozesseinheiten 3 ausgerichtet. Insbesondere ist die Umlenkeinheit über Balgeneinheiten 54 mit den jeweiligen Enden der Prozesseinheiten 3 verbunden, um eine vakuumdichte aber flexible Verbindung zwischen den Einheiten zu ermöglichen. Dies ist insbesondere von Vorteil, da die Prozesseinheiten 3 im Betrieb erwärmt werden und sich thermisch ausdehnen können. Eine flexible Balgenverbindung wie dargestellt kann Belastungen zwischen den unterschiedlichen Einheiten verhindern. Alternativ wäre es aber auch möglich die Umlenkeinheit 40 direkt, also steif an den Enden der Prozesseinheit 3 zu befestigen.

Die Transport- und Führungsrollen 50 sind so versetzt zueinander und übereinander angeordnet, dass die Präkursorfasern 2 durch eine der Durchführungen 47 hindurch, um die Transport- und Führungsrollen 50 herum und aus der anderen der Durchführungen 48 herausgeführt werden können. Bei der Darstellung sind drei Transport- und Führungsrollen 50 vorgesehen, von denen zum Beispiel die obere und die untere feststehend ausgebildet sind, während die mittlere als eine Tänzerrolle ausgebildet ist, die sich zum Beispiel in der Horizontalen bewegen kann, um ein Spannung der Präkursorfasern 2 einzustellen und/oder Schwankungen im Transport aufzunehmen. Wenigstens eine der Transport- und Führungsrollen 50 kann mit einem Antriebsmotor verbunden sein, um einen aktiven Antrieb während der Umlenkung vorsehen zu können. Der Antriebsmotor kann innerhalb des Vakuumgehäuses 45 liegen oder auch außerhalb, wobei im letzteren Fall eine vakuumdichte Durchführung der Antriebswelle vorgesehen sein sollte. Die Anzahl und Anordnung der Transport- und Führungsrollen kann von der dargestellten Form abweichen, wie der Fachmann erkennen kann. Insbesondere kann im Bereich der Umlenkeinheiten die Fadenspannung der Präkursorfasern gemessen und eingestellt werden. Dies kann zum Beispiel über die Transport- und Führungsrollen 50 erfolgen. Hierdurch kann innerhalb der jeweiligen Prozesseinheiten 3 eine definierte Fadenspannung eingestellt werden.

Im Nachfolgenden wird ein Stabilisierungsprozess unter Nutzung der Stabilisierungsvorrichtung 1 näher erläutert, wobei von einer Vorrichtung gemäß Fig. 1 ausgegangen wird. Die hier angegebenen beispielhaften Werte für unterschiedlichste Parameter sind beispielhaft und bevorzugte Wertebereiche werden im Anschluss definiert. Zunächst wird eine Vielzahl von parallel zueinander verlaufenden Präkursorfasern 2 -beispielsweise PAN-Fasern- von der Zuführeinheit 7 über die Schleuseneinheit 4 in die Prozesseinheit 3 geführt. Von der Prozesseinheit 3 werden die Präkursorfasern 2 über die Schleuseneinheit 5 dann zur Aufnahmeeinheit 8 geführt, wo sie wieder aufgenommen werden. Die Prozesseinheit wird dann auf einen Unterdruck im Bereich von 12 bis 300 mBar gebracht. Als besonders vorteilhaft hat sich bisher ein Bereich von 50 bis 200 mBar gezeigt. Über die Gaszuführung wird die Vakuumkammer 10 mit Umgebungsluft beaufschlagt, die über die Vakuumpumpe wieder abgesaugt wird. So wird beispielsweise eine Strömung von 50 slm (Standard Liter pro Minute) eingestellt. Die abgesaugte Luft wird über eine entsprechende Nachbehandlungseinheit gereinigt, um während des Betriebs entstehende unerwünschte Gase, wie zum Beispiel CO, CO₂, NH₃ oder HCN abzutrennen bzw. unschädlich zu machen. Wie zuvor erwähnt sind die angegebenen Drücke für die Verwendung von Umgebungsluft angegeben, und sie darauf gerichtet eine Sauerstoff-Partialdruck von 2,5 bis 63 mBar (Kammerdruck 12 bis 300 mBar) bzw. 10,5 bis 42 mBar (Kammerdruck 50 bis 200 mBar) zu erreichen. Bei der Verwendung von anderen Gasen als Umgebungsluft können gegebenenfalls andere Kammerdrücke eingestellt werden, um die bevorzugten Sauerstoff-Partialdrücke zu erhalten.

Ferner werden die Heizplatten 20 angesteuert, sodass sie in Ihrer jeweiligen Zone eine konstante Temperatur in der Vakuumkammer 10 erzeugen. Beispielsweise wird in der ersten, links liegenden Zone eine Temperatur von 260°C eingestellt. In den benachbarten Zonen werden dann zum Beispiel Temperaturen von 320°C, 360°C, 380°C und 400°C eingestellt. Mithin gibt es zwischen den ersten zwei Zonen einen Temperatursprung von 60°C und zwischen der zweiten und der dritten Zone einen Temperatursprung von 40°C. Über die letzten drei Zonen ist die Temperatur konstant. Die Präkursorfasern 2 werden nun mit einer vorbestimmten Geschwindigkeit durch die Prozesseinheit 3 geführt, wobei die Geschwindigkeit so eingestellt ist, dass die die Präkursorfasern 2 ungefähr 20 Minuten benötigen, um durch eine entsprechende der Heizzonen hindurchbewegt zu werden. Wie der Fachmann erkennen kann, wird über die Geschwindigkeit die Verweilzeit der Präkursorfasern bei den unterschiedlichen Temperaturen eingestellt. Diese kann je nach Bedürfnis eingestellt werden.

In der jeweiligen Heizzone werden die Präkursorfasern 2 rasch auf die entsprechende Temperatur erwärmt und während des Durchlaufs auf dieser Temperatur gehalten. Mithin werden die Präkursorfasern 2 bei dem obigen Beispiel in einer kontrollierten Unterdruck-Gasatmosphäre in der Vakuumkammer 10 zunächst auf 260°C erwärmt und für ungefähr 20 Minuten auf dieser Temperatur gehalten, bevor sie auf 320°C erwärmt und wieder für ungefähr 20 Minuten auf dieser Temperatur gehalten werden. Anschließend werden die Präkursorfasern 2 auf 360°C erwärmt und für ungefähr 20 Minuten auf dieser Temperatur gehalten. Danach werden sie für jeweils 20 Minuten bei 380 und 400 °C behandelt. Während die Präkursorfasern 2 die Heizzonen in der Vakuumkammer 10 durchlaufen werden sie stabilisiert.

Die Erfinder haben herausgefunden, dass in der kontrollierten Unterdruckatmosphäre höhere Temperaturen als bei Atmosphärendruck in Luft eingesetzt werden können, ohne dass die Präkursorfasern 2 brennen oder thermisch beschädigt werden. Hierdurch konnten reproduzierbar gleichmäßig stabilisierte Präkursorfasern 2 mit einer hohen Dichte von höher als 1,38 g/cm³ und insbesondere über 1,42 g/cm³ hergestellt werden.

Die Erfinder haben festgestellt, dass wenigstens eine stufenweise Temperaturerhöhung vorteilhaft ist, wobei für PAN-Fasern die erste Temperatur im Bereich 220 bis 320°C und die zweite Temperatur im Bereich 280 bis 400°C liegt. Dabei stellt die zweite Temperatur die höchste Temperatur innerhalb der Vakuumkammer 10 dar, während vor der ersten Temperatur auch noch niedrigere Temperaturen eingestellt werden könne. Bevorzugt liegt die erste Temperatur im Bereich 260 bis 320°C und die zweite Temperatur im Bereich 300 bis 400°C, was wesentlich über den bisher verwendeten Temperaturen des Standes der Technik liegt. Bevorzugt liegt die zweite Temperatur um wenigstens 30°C, bevorzugt um wenigstens 40°C höher ist als die erste Temperatur. Die Temperatur kann stufenweise erhöht werden, wobei die Temperaturdifferenz zwischen aufeinanderfolgenden Stufen wenigstens 5°C, insbesondere wenigstens 10°C beträgt, und wobei Präkursorfasern für eine vorbestimmte Zeitdauer auf der wenigstens einen Zwischentemperatur gehalten werden. Es hat sich als vorteilhaft erwiesen, wenn sich die Temperaturbereiche der von zwei aufeinanderfolgenden Etagen überschneiden. So ist es vorteilhaft, wenn der Wiedereintritt der Faser in die nächste Etage bei gleicher oder sogar geringerer Temperatur als der vorhergehende Austritt stattfindet. Die Zeitdauer pro Temperaturstufe sollte bevorzugt wenigstens 5 Minuten betragen, wobei die Zeitdauer bei kleinen Temperatursprüngen auch kürzer ausfallen kann. Die Verweildauer ist, bei der obigen Ausführungsform von der Länge der jeweiligen Heizzone und der Transportgeschwindigkeit der Präkursorfasern 2 abhängig. Während die Länge der einzelnen Heizzonen vorgegeben ist, ist über die Transportgeschwindigkeit die Verweildauer einstellbar. Natürlich können auch Heizzonen gleichmäßig beheizt werden, um hierdurch zum Beispiel die Verweildauer bei einer bestimmten Temperatur zu vervielfachen.

Bei der obigen Prozessbeschreibung wurde von einer einzelnen Prozesseinheit 3 gemäß Fig. 1 ausgegangen. Bei einer Ausführungsform gemäß Fig. 6 mit drei übereinanderliegenden Prozesseinheiten 3 ist der Ablauf ähnlich, wobei hier zum Beispiel jeweils nur eine oder zwei Heizzonen pro Prozesseinheit 3 vorgesehen sein können in denen die unterschiedlichen Temperaturen eingestellt werden. Die Umlenkeinheiten sind nicht beheizt, sodass es beim Übergang von einer Prozesseinheit 3 zur nächsten zu einer geringfügigen Abkühlung der Präkursorfasern 2 kommen kann, die aber nicht als schädlich angesehen wird, da die bis zu diesem Zeitpunkt erreichte Stabilisierung erhalten bleibt. Sollten sich jedoch aus einer zwischenzeitlichen Abkühlung Probleme ergeben, wäre es auch möglich die jeweiligen Umlenkeinheiten entsprechend zu temperieren. Die Ausführungsform gemäß Fig. 6 ermöglicht eine flexiblere Temperatureinstellung mit mehreren Heizzonen bei geringerem Stellflächenbedarf. Statt der drei können natürlich auch nur zwei oder mehr Prozesseinheiten übereinanderliegend vorgesehen werden, wobei bei einer geradzahligen Anzahl von Prozesseinheiten 3 die Präkursorfasern 2 von derselben Seite her zu und abgeführt werden müssten.

Andere Präkursorfasern lassen sich entsprechend stabilisieren, wobei hier andere Temperaturbereiche und Verweilzeiten eingesetzt werden können. Die Erfinder haben unter anderem herausgefunden, dass durch die Reduktion des Drucks im Prozessbereich, insbesondere durch eine Reduktion des Sauerstoff-Partialdrucks, die Stabilisierung der Präkursorfasern für die Carbonfaserherstellung bei höheren Temperaturen erfolgen kann. Dies kann einerseits die Stabilisierung beschleunigen und darüber hinaus auch die Faserqualität positiv beeinflussen. Insbesondere hat sich Sauerstoff-Partialdruck zwischen 2,5 bis 63 mBar, bevorzugt zwischen 10,5 bis 42 mBar als vorteilhaft herausgestellt. Ein Unterdruck kann unter anderem auch das Ausgasen der Fasern unterstützen.

Die Anmeldung wurde anhand bevorzugten Ausführungsformen näher erläutert, ohne auf die konkreten Ausgestaltungen beschränkt zu sein.

## Patentansprüche

1. Verfahren zum Stabilisieren von Präkursorfasern für die Carbonfaserherstellung, das die folgenden Schritte aufweist:
Erwärmen der Präkursorfasern auf eine erste Temperatur und Halten der Temperatur für eine vorbestimmte Zeitdauer; und
anschließendes Erwärmen der Präkursorfasern auf wenigstens eine zweite Temperatur, die höher ist als die erste Temperatur und Halten der Temperatur für eine vorbestimmte Zeitdauer;
wobei sich die Präkursorfasern während der jeweiligen Erwärmung und zwischen den Erwärmungsschritten in einer Gasatmosphäre mit einem Unterdruck im Bereich zwischen 1,2 × 10³ PA und 30 × 10³ PA (12 mBar und 300 mBar) befinden.

2. Verfahren nach Anspruch 1, wobei sich die Präkursorfasern während der jeweiligen Erwärmung und zwischen den Erwärmungsschritten in einer Gasatmosphäre mit einem Unterdruck im Bereich zwischen 5 × 10³ PA und 20 × 10³ PA (50 mBar und 200 mBar) befinden.

3. Verfahren zum Stabilisieren von Präkursorfasern für die Carbonfaserherstellung, das die folgenden Schritte aufweist:
Erwärmen der Präkursorfasern auf eine erste Temperatur und Halten der Temperatur für eine vorbestimmte Zeitdauer; und
anschließendes Erwärmen der Präkursorfasern auf wenigstens eine zweite Temperatur, die höher ist als die erste Temperatur und Halten der Temperatur für eine vorbestimmte Zeitdauer;
wobei sich die Präkursorfasern während der jeweiligen Erwärmung und zwischen den Erwärmungsschritten in einer Gasatmosphäre mit einem Sauerstoff-Partialdruck im Bereich zwischen 250 PA und 6,3 × 10³ PA (2,5 mBar und 63 mBar) befinden.

4. Verfahren nach Anspruch 3, wobei sich die Präkursorfasern während der jeweiligen Erwärmung und zwischen den Erwärmungsschritten in einer Gasatmosphäre mit einem Sauerstoff-Partialdruck im Bereich zwischen 1,05 × 10³ PA und 4,2 × 10³ PA (10,5 mBar und 42 mBar).

5. Verfahren nach einem der vorhergehenden Ansprüche, wobei die Präkursorfasern stufenweise über wenigstens eine weitere Zwischentemperatur von der ersten Temperatur auf die der zweite Temperatur erwärmt werden, wobei die Temperaturdifferenz zwischen zeitlich aufeinanderfolgenden Stufen wenigstens 5°C, insbesondere wenigstens 10°C beträgt, und wobei Präkursorfasern für eine vorbestimmte Zeitdauer auf der wenigstens einen Zwischentemperatur gehalten werden.

6. Verfahren nach Anspruch 3, wobei zeitlich aufeinanderfolgende Stufen eine negative Temperaturdifferenz aufweisen können, sodass die Präkursorfasern zwischenzeitig abkühlen, jedoch nicht unter die erste Temperatur.

7. Verfahren nach einem der vorhergehenden Ansprüche, wobei die zweite Temperatur um wenigstens 30°C, bevorzugt um wenigstens 40°C höher ist als die erste Temperatur.

8. Verfahren nach einem der vorhergehenden Ansprüche, wobei die Präkursorfasern für jeweils wenigsten 10 Min, bevorzugt für wenigstens 20 Min auf der ersten Temperatur, der zweiten Temperatur und wenigstens einer optionalen Zwischentemperatur gehalten werden.

9. Verfahren nach einem der vorhergehenden Ansprüche, wobei die Präkursorfasern PAN-Fasern sind und die erste Temperatur im Bereich 220 bis 320°C, bevorzugt im Bereich 260 bis 320°C, und die zweite Temperatur im Bereich 280 bis 400°C, bevorzugt im Bereich 300 bis 380°C, liegt.

10. Verfahren nach einem der Ansprüche 1 bis 8, wobei die Präkursorfasern auf Basis von Cellulose und/oder Lignin aufgebaut sind und die erste Temperatur im Bereich 200 - 240°C und die zweite Temperatur im Bereich 240 - 300°C liegt.

11. Verfahren nach einem der vorhergehenden Ansprüche, wobei die Präkursorfasern während des Verfahrens kontinuierlich durch einen Unterdruckbereich hindurchgeführt werden, und/oder
wobei die Präkursorfasern während des Verfahrens durch wenigstens eine Muffel mit wenigstens zwei benachbarten, unterschiedlich Temperierten Zonen hindurchgeführt wird, und/oder
wobei die Präkursorfasern während des Verfahrens unter definierter Spannung gehalten werden, und/oder
wobei die Gasatmosphäre während des Stabilisierungsverfahrens kontinuierlich oder intermittierend ausgetauscht wird.

12. Vorrichtung (1) zum Stabilisieren von Präkursorfasern (2) für die Carbonfaserherstellung, die Folgendes aufweist:
wenigstens eine langgestreckte Vakuumkammer (10), zum Hindurchführen der Präkursorfasern (2), wobei die Vakuumkammer (10) auf unter 30 × 10³ PA (300 mBar) evakuierbar ist;
wenigstens einer Schleuseneinheit (4) an einem Ende der wenigstens einen Vakuumkammer (10), zum abgedichteten Einführen einer Vielzahl von Präkursorfasern (2) in die wenigstens eine Vakuumkammer (10);
wenigstens einer Schleuseneinheit (5) an einem Ende der wenigstens einen Vakuumkammer (10), zum abgedichteten Ausführen einer Vielzahl von Präkursorfasern (2) aus der wenigstens einen Vakuumkammer (10); und
wenigstens eine Heizeinheit (12) mit wenigsten zwei individuell ansteuerbaren Heizelementen (20), die geeignet sind die wenigstens eine Vakuumkammer (10) in in Längsrichtung benachbarten Heizzonen auf wenigstens zwei unterschiedliche Temperaturen aufzuheizen.

13. Vorrichtung (1) nach Anspruch 12, die ferner eine Transporteinheit (7, 8) aufweist, die geeignet ist kontinuierlich Präkursorfasern (2) mit einer gewünschten Geschwindigkeit und Spannung durch die Vakuumkammer (10) zu fördern, wobei die Transportvorrichtung (7, 8) bevorzugt geeignet ist die Präkursorfasern (2) während des Transports unter definierter Spannung mit einer Kraft zwischen 0,5 und 10N pro 3k Faserbündel zu halten.

14. Vorrichtung (1) nach Anspruch 12 oder 13, wobei die Heizeinheit (12) geeignet ist die wenigstens eine Vakuumkammer (10) in wenigstens 3 Heizzonen auf unterschiedliche Temperaturen aufzuheizen, und/oder
wobei die Heizeinheit (12) geeignet ist die wenigstens eine Vakuumkammer (10) in einer ersten Heizzone auf eine erste Temperatur im Bereich 200 bis 320°C und in einer zweiten Heizzone auf eine zweite Temperatur im Bereich 280 bis 400°C zu erwärmen.

15. Vorrichtung (1) nach einem der Ansprüche 16 bis 20, die wenigstens zwei übereinanderliegende Vakuumkammern (10) und wenigstens eine Umlenkeinheit (40) aufweist, wobei die Umlenkeinheit (40) übereinanderliegende Enden der Vakuumkammern (10) vakuumdicht verbindet, um einen fortlaufenden Vakuumraum zu bilden und wobei die Umlenkeinheit (40) wenigstens eine Faserführung (50) zum Führen der Präkursorfasern (2) von einer Vakuumkammer (10) zur nächsten aufweist.

## Claims

1. A method for stabilizing precursor fibers for the carbon fiber production, comprising the following steps:
heating the precursor fibers to a first temperature and maintaining the precursor fibers at the first temperature for a predetermined period of time; and
subsequently heating the precursor fibers to at least a second temperature higher than the first temperature and maintaining the precursor fibers at the second temperature for a predetermined period of time;
wherein the precursor fibers are in a gas atmosphere with a negative pressure in a range between 1.2 × 10³ PA and 30 × 10³ PA (12 mBar and 300 mBar) during the respective heating and between the heating steps.

2. The method according to claim 1, wherein the precursor fibers are in a gas atmosphere with a negative pressure in a range between 5 × 10³ PA and 30 × 10³ PA (50 mBar and 200 mBar) during the respective heating and between the heating steps.

3. A method for stabilizing precursor fibers for the carbon fiber production, comprising the following steps:
heating the precursor fibers to a first temperature and maintaining the precursor fibers at the first temperature for a predetermined period of time; and
subsequently heating the precursor fibers to at least a second temperature higher than the first temperature and maintaining the precursor fibers at the second temperature for a predetermined period of time;
wherein the precursor fibers are in a gas atmosphere having an oxygen partial pressure in a range between 250 PA and 6,3 × 10³ PA (2.5 mBar and 63 mBar) during the respective heating and between the heating steps.

4. The method according to claim 3, wherein the precursor fibers are in a gas atmosphere having an oxygen partial pressure in a range between 1,05 × 10³ PA and 4,2 × 10³ PA (10.5 mBar and 42 mBar) during the respective heating and between the heating steps.

5. The method according to any one of the preceding claims, wherein the precursor fibers are heated stepwise via at least one further intermediate temperature from the first temperature to the second temperature, wherein the temperature difference between successive steps is at least 5°C, in particular at least 10°C, and wherein precursor fibers are maintained at the at least one intermediate temperature for a predetermined period of time.

6. The method according to claim 3, wherein temporally successive stages can have a negative temperature difference, so that there is an interim cooling of the precursor fibers, however, this cooling does not lower the temperature below the first temperature.

7. The method according to any of the preceding claims, wherein the second temperature is at least 30°C, preferably at least 40°C higher than the first temperature.

8. The method according to any of the preceding claims, wherein the precursor fibers are maintained at the first temperature, the second temperature and at least one optional intermediate temperature for at least 10 minutes, preferably for at least 20 minutes.

9. The method according to any of the preceding claims, wherein the precursor fibers are PAN fibers and the first temperature is in the range of 220 to 320°C, preferably in the range of 260 to 320°C, and the second temperature is in the range of 280 to 400°C, preferably in the range of 300 to 380°C.

10. The method according to any one of claims 1 to 8, wherein the precursor fibers are based on cellulose and/or lignin and the first temperature is in the range of 200 to 240°C and the second temperature is in the range of 240 to 300°C.

11. The method according to any one of the preceding claims, wherein the precursor fibers are continuously passed through a negative pressure region during the method, and/or
wherein the precursor fibers are moved through at least one muffle furnace having at least two adjacent zones of different temperature during the method, and/or
wherein the precursor fibers are kept under a defined tension during the method, and/or
wherein the gas atmosphere is exchanged continuously or intermittently during the stabilization process.

12. An apparatus (1) for stabilizing precursor fibers (2) for the carbon fiber production, comprising:
at least one elongated vacuum chamber (10) for passing the precursor fibers (2) therethrough, wherein the vacuum chamber (10) is evacuable to a pressure below 30 × 10³ PA (300 mBar);
at least one air lock unit (4) at one end of said at least one vacuum chamber (10) for introducing a plurality of precursor fibers (2) into said at least one vacuum chamber (10) in a sealed manner;
at least one air lock unit (5) at one end of said at least one vacuum chamber (10) for extracting the plurality of precursor fibers (2) from said at least one vacuum chamber (10) in a sealed manner; and
at least one heating unit (12) having at least two individually controllable heating elements (20) which are configured to heat the at least one vacuum chamber (10) in heating zones, which are adjacent in the longitudinal direction, to at least two different temperatures.

13. The apparatus (1) according to claim 12, further comprising a transport unit (7, 8) configured to continuously transporting precursor fibers (2) through the vacuum chamber (10) at a desired speed and under a desired tension, wherein the transport device (7, 8) is preferably configured to maintain the precursor fibers (2) under a defined tension during the transport with a force between 0.5 and 10N per 3k fiber bundle.

14. The apparatus (1) according to one of claims 12 or 13, wherein the heating unit (12) is configured to heat the at least one vacuum chamber (10) to different temperatures in at least 3 heating zones, and/or
wherein the heating unit (12) is configured to heat the at least one vacuum chamber (10) in a first heating zone to a first temperature in the range of 200 to 320°C and in a second heating zone to a second temperature in the range of 280 to 400°C.

15. The apparatus (1) according to any one of claims 12 to 14, comprising at least two stacked vacuum chambers (10) and at least one deflection unit (40), wherein the deflection unit (40) connects ends of the vacuum chambers (10) arranged one over the other in a vacuum-tight manner to form a continuous vacuum space, and wherein the deflection unit (40) comprises at least one fiber guide (50) for guiding the precursor fibers (2) from one vacuum chamber (10) to the next.

## Revendications

1. Procédé de stabilisation de fibres précurseurs pour la production de fibres de carbone, comprenant les étapes suivantes :
le chauffage des fibres précurseurs à une première température et le maintien des fibres précurseurs à la température pendant une période de temps prédéterminée ; et
le chauffage ultérieur des fibres précurseurs à au moins une deuxième température qui est supérieure à la première température et le maintien des fibres précurseurs à la deuxième température pendant une période de temps prédéterminée ;
dans lequel les fibres précurseurs se trouvent dans une atmosphère gazeuse ayant une pression négative dans la plage allant de 1,2 × 103 PA à 30 × 103 PA (12 mBar à 300 mBar) pendant le chauffage respectif et entre les étapes de chauffage.

2. Procédé selon la revendication 1, dans lequel les fibres précurseurs sont dans une atmosphère gazeuse ayant une pression négative dans la plage allant de 5 × 103 PA à 30 × 103 PA (50 mBar à 200 mBar) pendant le chauffage respectif et entre les étapes de chauffage.

3. Procédé de stabilisation de fibres précurseurs pour la production de fibres de carbone, comprenant les étapes suivantes :
le chauffage des fibres précurseurs à une première température et le maintien des fibres précurseurs à la température pendant une période de temps prédéterminée ; et
le chauffage ultérieur des fibres précurseurs à au moins une deuxième température supérieure à la première température et le maintien des fibres précurseurs à la deuxième température pendant une période de temps prédéterminée ;
dans lequel les fibres précurseurs sont dans une atmosphère gazeuse ayant une pression partielle d'oxygène dans la plage allant de 250 PA à 6,3 × 103 PA (2,5 mBar à 63 mBar) pendant le chauffage respectif et entre les étapes de chauffage.

4. Procédé selon la revendication 3, dans lequel les fibres précurseurs sont dans une atmosphère gazeuse ayant une pression partielle d'oxygène dans la plage allant de 1,05 × 103 PA à 6,3 × 103 PA (10,5 mBar à 42 bar) pendant le chauffage respectif et entre les étapes de chauffage.

5. Procédé selon l'une quelconque des revendications précédentes, dans lequel les fibres précurseurs sont chauffées par paliers par l'intermédiaire d'au moins une autre température intermédiaire de la première température à la deuxième température, dans lequel la différence de température entre les étapes successives est d'au moins 5 °C, en particulier d'au moins 10 °C, et dans lequel les fibres précurseurs sont maintenues à ladite au moins une température intermédiaire pendant une période de temps prédéterminée.

6. Procédé selon la revendication 3, dans lequel des étapes successives temporaires peuvent présenter une différence de température négative, de sorte qu'il y ai un refroidissement intermédiaire des fibres précurseurs, mais ce refroidissement n'abaissent pas la température en-dessous de la première température.

7. Procédé selon l'une quelconque des revendications précédentes, dans lequel la deuxième température est supérieure d'au moins 30 °C, de préférence d'au moins 40 °C, à la première température.

8. Procédé selon l'une quelconque des revendications précédentes, dans lequel les fibres précurseurs sont maintenues à la première température, à la deuxième température et à au moins une température intermédiaire éventuelle pendant au moins 10 minutes, de préférence pendant au moins 20 minutes.

9. Procédé selon l'une des revendications précédentes, dans lequel les fibres précurseurs sont des fibres PAN et la première température est dans la plage allant de 220 à 320 °C, de préférence dans la plage allant de 260 à 320 °C, et la deuxième température est dans la plage allant de 280 à 400 °C, de préférence dans la plage allant de 300 à 380 °C.

10. Procédé selon l'une quelconque des revendications 1 à 8, dans lequel les fibres précurseurs sont à base de cellulose et/ou de lignine et la première température est dans la plage allant de 200 à 240 °C et la deuxième température est dans la plage allant de 240 à 300 °C.

11. Procédé selon l'une quelconque des revendications précédentes, dans lequel les fibres précurseurs sont amenées à traverser en continu une région de pression négative pendant le procédé, et/ou
dans lequel les fibres précurseurs sont amenées à traverser au moins un four à moufle ayant au moins deux zones adjacentes à des températures différentes pendant le procédé, et/ou
dans lequel les fibres précurseurs sont maintenues sous une tension définie pendant le procédé, et/ou
dans lequel l'atmosphère gazeuse est échangée en continu ou par intermittence pendant le processus de stabilisation.

12. Appareil (1) de stabilisation de fibres précurseurs (2) pour la production de fibres de carbone, comprenant :
au moins une chambre à vide allongée (10) dans laquelle faire passer les fibres précurseurs (2), dans lequel la chambre à vide (10) peut être évacuée jusqu'à une pression inférieure à 30 × 103 PA (300 mBar) ;
au moins une unité de verrouillage à air (4) à une extrémité de ladite au moins une chambre à vide (10) pour introduire de manière étanche une pluralité de fibres précurseurs (2) à l'intérieur de ladite au moins une chambre à vide (10) ;
au moins une unité de verrouillage à air (5) à au moins une extrémité de ladite au moins une chambre à vide (10) pour expulser de manière étanche la pluralité de fibres précurseurs (2) hors de ladite au moins une chambre à vide (10) ; et
au moins une unité de chauffage (12) ayant au moins deux éléments chauffants réglables individuellement (20) qui sont configurés pour chauffer à au moins deux températures différentes des zones de chauffage de ladite au moins une chambre à vide (10) qui sont adjacentes dans la direction longitudinale.

13. Appareil (1) selon la revendication 12, comprenant en outre une unité de transport (7, 8) configurée pour transporter en continu des fibres précurseurs (2) à travers la chambre à vide (10) à une vitesse souhaitée et sous une tension souhaitée, dans lequel le dispositif de transport (7, 8) est de préférence configuré pour maintenir les fibres précurseurs (2) sous une tension définie pendant le transport avec une force comprise entre 0,5 et 10 N par faisceau de fibres de 3k.

14. Appareil (1) selon l'une des revendications 12 ou 13, dans lequel l'unité de chauffage (12) est configurée pour chauffer au moins une chambre à vide (10) à différentes températures dans au moins 3 zones de chauffage, et/ou
dans lequel l'unité de chauffage (12) est configurée pour chauffer l'au moins une chambre à vide (10) dans une première zone de chauffage à une première température dans la plage allant de 200 à 320 °C et dans une deuxième zone de chauffage à une deuxième température dans la plage allant de 280 à 400 °C.

15. Appareil (1) selon l'une quelconque des revendications 12 à 14, comprenant au moins deux chambres à vide superposées (10) et au moins une unité de déflexion (40), dans lequel l'unité de déflexion connecte de façon étanche au vide des extrémités des chambres à vide (10) disposées l'une au-dessus de l'autre pour former un espace sous vide continu et dans lequel l'unité de déflexion (40) comprend au moins un guide de fibres (50) pour guider les fibres précurseur (2) d'une chambre à vide (10) à la suivante.
